# EUROPÄISCHE PATENTSCHRIFT

(11) **EP 2 587 738 B1**
(45) Veröffentlichungstag und Bekanntmachung des Hinweises auf die Patenterteilung: **06.08.2014**
(21) Anmeldenummer: 12187091.9
(22) Anmeldetag: 03.10.2012
(51) Int. Cl.: H04L 12/40, H04L 29/06

(54) **Verfahren und ein Busgerät zum Übertragen von sicherheitsgerichteten Daten**
Method and a bus device for transferring security-oriented data
Procédé et appareil à bus destinés à transmettre des données orientées vers la sécurité

(30) Priorität: 27.10.2011 AT 15822011
(43) Veröffentlichungstag der Anmeldung: 01.05.2013
(73) Patentinhaber: Bernecker+Rainer Industrie-Elektronik Gesellschaft MbH, 5142 Eggelsberg (AT)
(72) Erfinder: Kaufleitner, Franz, 5122 Hochburg-Ach (AT)
(74) Vertreter: Weiss, Christian

(56) Entgegenhaltungen:
- US-A1- 2004 230 323
- MARCOS M ET AL: "ON THE DESIGN AND DEVELOPMENT OF A GATEWAY BETWEEN MAP-MMS AND PROFIBUS/FMS", PROCEEDINGS IEEE INTERNATIONAL WORKSHOP ON FACTORY COMMUNICATIONSYSTEMS, XX, XX, 1. Januar 1997 (1997-01-01), Seiten 349-353, XP000995489, DOI: 10.1109/WFCS.1997.634319
- "openSAFETY der Schlüssel für Ihre sicherheit", Ethernet POWERLINK Facts, 1. April 2010 (2010-04-01), Seiten 1-20, XP055044724, POWERLINK-Office, Kurfürstenstrasse 112, 10787 Berlin Gefunden im Internet: URL:http://www.ethernet-powerlink.org/inde x.php?id=12 [gefunden am 2012-11-19]

## Beschreibung

Die gegenständliche Erfindung betrifft ein Verfahren und ein Busgerät zum Übertragen von sicherheitsgerichteten Daten eines Sicherheitsprotokolls in einem ethernetbasierten Feldbus.

Industrial Ethernet Protokolle, wie z.B. POWERLINK, Ethernet IP, ProfiNet, Ethercat, etc., sind in der Automatisierung etabliert und werden für den standardisierten Datenaustausch zwischen Busteilnehmern in einem Feldbussystem verwendet. Diese Protokolle sind alleine aber nicht geeignet, sicherheitstechnische Daten z.B. im Sinne der internationalen Norm IEC 61508 oder anderer sicherheitstechnischer Normen zu übertragen. Üblicherweise wird hierzu ein Sicherheitsprotokoll, wie z.B. OpenSAFETY, ProfiSafe, CIPsafety, Safety over Ethercat, etc., verwendet, welches die Daten gemäß den sicherheitstechnischen Anforderungen absichert. Durch das Sicherheitsprotokoll werden die übertragenen Daten gegen Datenfehler, Datenverlust und Übertragungsfehler abgesichert, um eine korrekte Datenübertragung innerhalb der vorgesehenen Übertragungszeiten sicherstellen zu können. Das Sicherheitsprotokoll hat dazu entsprechende Mechanismen vorgesehen, mit denen allfällige Übertragungsfehler erkannt und korrigiert werden können. Die Daten des Sicherheitsprotokolls werden dabei gekapselt in einer herkömmlichen Ethernet-Nachricht übertragen. Solche Industrial Ethernet Protokolle und Sicherheitsprotokolle sind hinlänglich bekannt, weshalb hier nicht näher darauf eingegangen wird.

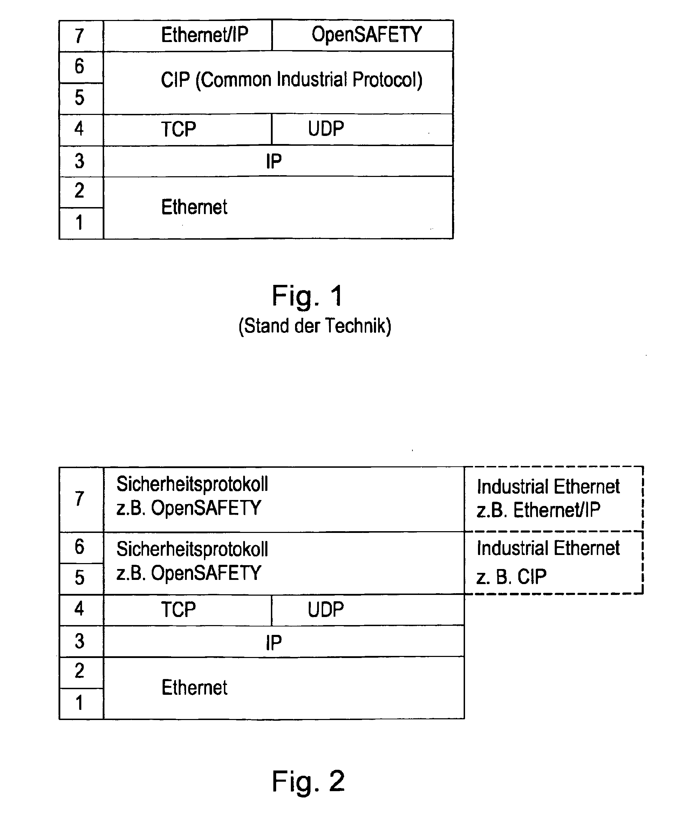

Datenkommunikationsprotokolle folgen dem bekannten OSI-Schichtmodell. Für alle Industrial Ethernet Protokolle sind die Schichten 1 und 2, also die physikalische Übertragungsschicht und die Verbindungsschicht, gleich. Damit können grundsätzlich alle diese Industrial Ethernet Protokolle auf demselben ethernetbasierten Feldbus übertragen werden. Die Schichten 3 und 4, also die Vermittlungsschicht und die Transportschicht, sind in vielfältigen, standardisierten Ausprägungen vorhanden, wie z.B. TCP/IP oder UDP/IP. Die Industrial Ethernet Protokolle nutzen in der Regel diese standardisierten Schichten 3 und 4, könne aber auch eigene, speziell entwickelte Schichten 3 und 4 nutzen. Die Schichten 5 und 6, also die Sitzungsschicht und die Darstellungsschicht, werden in der Regel aber bereits vom gewählten Industrial Ethernet Protokoll vorgegeben und dadurch festgelegt. Jedes Industrial Ethernet Protokoll unterliegt dabei einem Standardisierungsgremium, dem die Spezifikation dieser Schichten 5 und 6 obliegt. Diese Schichten 5 und 6 sind daher den Anwendern der Industrial Ethernet Protokolle nicht zugänglich. In der Schicht 7, der Anwendungsschicht, läuft die Software, über die der Zugriff auf den Ethernetbus erfolgt, z.B. die Automatisierungs-SW. Ein Sicherheitsprotokoll läuft ebenfalls in der Anwendungsschicht 7, d.h. sämtliche sicherheitsgerichteten Mechanismen des Sicherheitsprotokolls sind in der Anwendungsschicht 7 implementiert und sicherheitsgerichtete Daten des Sicherheitsprotokolls werden gekapselt in einer Nachricht des Industrial Ethernet Protokolls übertragen. In Fig. 1 ist das anhand des Sicherheitsprotokolls OpenSAFETY, das mit dem Industrial Ethernet Protokoll Ethernet/IP übertragen wird, erläutert. OpenSAFETY ist in der Anwendungsschicht 7 implementiert und nutzt hier beispielsweise das standardisierte CIP (Common Industrial Protocol) des bekannten Ethernet/IP-Protokolls in den Schichten 5 und 6. Übertragen wird die sicherheitsgerichtete Nachricht des OpenSAFETY Protokolls gekapselt in einer TCP/IP oder UDP/IP Nachricht über einen Ethernetbus, das ist z.B. aus "openSAFETY der Schlüssel für Ihre Sicherheit", Ethernet POWERLINK Facts, 1.4.2010, Seiten 1-20 bekannt.

Aufgrund der oben beschriebenen Situation ist es zwar möglich, dass verschiedene sicherheitsgerichtete Protokolle auf demselben Ethernetbus übertragen werden, da die Schichten 1 und 2 identisch sind. Bei der Übertragung sicherheitstechnischer Daten in unterschiedlichen Industrial Ethernet Netzwerken sind aber Anpassungen in den Schichten 5 und 6 eventuell auch in der Schicht 7 und/oder die Implementierung einer Zwischenschicht zur Datenkonvertierung notwendig. Die direkte Kommunikation zwischen Busteilnehmern, die zwar dasselbe Sicherheitsprotokoll (z.B. OpenSAFETY) aber unterschiedliche Industrial Ethernet Protokolle (z.B. Ethernet/IP oder PROFINET) nutzen, ist dadurch ebenfalls nicht möglich. D.h., dass ein Busteilnehmer, auf dem OpenSAFETY für Ethernet/IP implementiert ist, nicht mit einem Teilnehmer kommunizieren kann, der OpenSAFETY für PROFINET implementiert hat. Damit ist die Flexibilität in der Anwendung von Sicherheitsprotokollen sehr eingeschränkt, oder es müssen spezielle Gateways vorgesehen werden, die verschiedenen Busse miteinander verbinden, was aber wiederum aufwendig ist. Weiters muss ein Busgerät das ein bestimmtes Sicherheitsprotokoll implementiert hat, für jedes erdenkliche Industrial Ethernet Protokoll entwickelt werden, was zu einer Vielzahl von Varianten eines Busgeräts führt und erheblichen Entwicklungs- und Wartungsaufwand erfordert.

Dazu kommt noch, dass Sicherheitsprotokolle, wie z.B. OpenSAFETY, zur Umsetzung der Sicherheitsmechanismen eigene Schichten 5 und 6 implementiert haben können. Eine sicherheitsgerichtete Nachricht gemäß dem gewählten Sicherheitsprotokoll wird folglich in einen sicheren Datenframe verpackt, der auch Information der Schichten 5 und 6 des Sicherheitsprotokolls umfasst. Diese sichere Nachricht wird dann gekapselt im gewählten Industrial Ethernet Protokoll übertragen, in dem die sichere Nachricht wieder Information der Schichten 5 und 6 des Industrial Ethernet Protokolls enthält. Damit ergibt sich aber ein erhöhter Datenoverhead, was die verfügbare Datenrate nachvollziehbar reduziert.

Das Dokument "On the Design and Development of a Gateway between MAP/MMS and Profibus/FMS" DOI: 10.1109/WFCS.1997.634319, offenbart den transparenten Informationsaustausch in einem Gateway zwischen unterschiedlichen Ethernet/Profibus basierten Automatisierungs-Protokotten und deren OSI-Schichtmodelle.

Die US 2004/0230323 A1 beschreibt ein proprietäres Sicherheitsprotokoll, dass über einen gewöhnlichen Feldbus (physikalische Schicht 1) übertragen werden kann, wobei hier die Sitzungsschicht und die Darstellungsschicht, und auch die Schichten 3 und 4 des OSI-Schichtmodells, nicht benutzt werden. Damit kann das Sicherheitsprotokoll vom sonst auf dem Feldbus verwendeten Industrial Ethernet Protokoll entkoppelt werden.

Es ist daher eine Aufgabe der gegenständlichen Erfindung, die oben angeführten Nachteile bekannter Sicherheitsprotokolle, die ein Industrial Ethernet Protokoll als Transportmittel nutzen, zu beheben.

Diese Aufgabe wird erfindungsgemäß dadurch gelöst, indem ein Industrial Ethernet Protokoll zum Übertragen der sicherheitsgerichteten Daten verwendet wird, das auf einem standardisierten Industrial Ethernet Protokoll basiert, wobei das Industrial Ethernet Protokoll anstelle der im standardisierten Industrial Ethernet Protokoll implementierten Sitzungsschicht und/oder Darstellungsschicht, die vom standardisierten Industrial Ethernet Protokoll unabhängige Sitzungsschicht und/oder die Darstellungsschicht des Sicherheitsprotokolls verwendet. Damit wird das Übertragungsverfahren bzw. das Busgerät unabhängig von der konkreten Ausprägung des Industrial Ethernet Protokolls und kann damit ohne wesentliche Anpassungen in jedem Industrial Ethernet Protokoll verwendet werden. Somit muss ein sicheres Busgerät, das ein bestimmtes Sicherheitsprotokoll implementiert hat, nicht mehr für jedes erdenkliche Industrial Ethernet Protokoll entwickelt werden, also z.B. OpenSAFETY für PROFINET, OpenSAFETY für Ethernet/IP, etc., sondern es reicht aus, wenn ein sicheres Busgerät einmal entwickelt wird, da dieses dann in jedem Industrial Ethernet einsetzbar ist. Damit werden erhebliche Entwicklungskosten gespart und ein solches Busgerät ist äußerst flexibel verwendbar.

Die gegenständliche Erfindung wird unter Bezugnahme auf die schematischen und beispielhaften Figuren 1 bis 3, die eine vorteilhafte Ausgestaltung der Erfindung zeigen, beschrieben. Dabei zeigt die
Fig. 1 das Schichtenmodell eines auf OpenSAFETY basierenden Sicherheitsprotokolls nach dem Stand der Technik,
Fig. 2 das Schichtenmodell eines auf OpenSAFETY basierenden Sicherheitsprotokolls nach der Erfindung und
Fig. 3 eine typische Ausgestaltung eines Feldbusses für eine Automatisierungsaufgabe.

Die Grundidee der Erfindung wird in Fig. 2 deutlich. Wie bisher ist die erfindungsgemäße Datenkommunikation nach dem bekannten Schichtenmodell dargestellt. Das Sicherheitsprotokoll, hier OpenSAFETY, mit allen notwendigen Sicherheitsmechanismen, ist wieder in der Anwendungsschicht 7 implementiert. Anstelle des standardisierten, nicht offenen Protokolls CIP in den Schichten 5 und 6 werden nun aber die im Sicherheitsprotokoll (OpenSAFETY) ebenfalls definierte Sicherheitsschicht 5 und Darstellungsschicht 6 des Sicherheitsprotokolls genutzt. Dieses ist vom Industrial Ethernet Protokoll unabhängig und vorteilhaft ein offener Standard, d.h. für alle Anwender innerhalb der Vorgaben des offenen Standards frei zugänglich.

Es kann für die Datenkommunikation auch ausreichend sein, nur die Sicherheitsschicht 5 oder die Darstellungsschicht 6 zu implementieren. In diesem Fall reicht es natürlich, wenn fürdie Datenkommunikation ebenfalls nur die Sicherheitsschicht 5 oder die Darstellungsschicht 6 des Sicherheitsprotokolls verwendet wird.

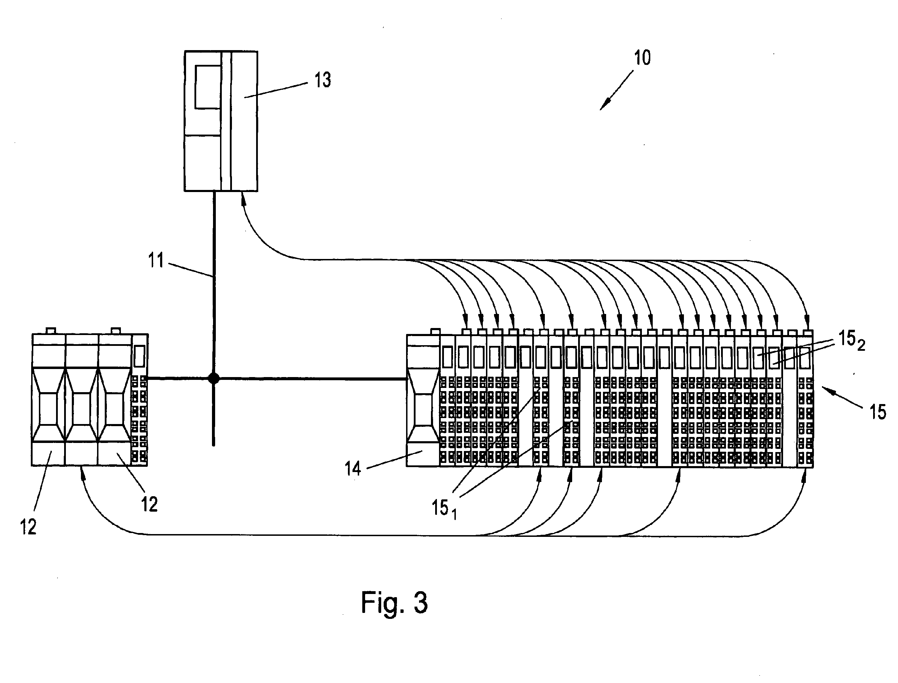

Fig.3 zeigt eine typische Konfiguration eines Feldbusses 10 in einer Automatisierungsumgebung. An einer Anzahl von I/O-Einheiten 15 sind in an sich bekannter Weise, hier nicht dargestellte, Sensoren oder Aktoren angeschlossen. Die Sensoren und Aktoren kommunizieren mit Steuergeräten 12, 13, die die Automatisierungsaufgaben steuern. Die Kommunikation erfolgt über einen Feldbus 11, an denen alle Busteilnehmer angeschlossen sind. Die I/O-Einheiten 15 können zur direkten Kommunikation mit den Steuergeräten 12, 13 ausgeführt sein, oder es kann vorgesehen sein, dass ein Buscontroller 14 die Kommunikation zwischen den Steuergeräten 12, 13 und den einzelnen I/O-Einheiten 15 übernimmt, wie in Fig. 3 dargestellt. Dazu tauscht der Buscontroller 14 z.B. über einen Datenbus einer Backplane Daten mit den I/O-Einheiten 15 aus und verbindet die I/O-Einheiten 15 mit dem Feldbus 11. Die dargestellten Pfeile in Fig. 3 stellen zum besseren Verständnis nur den logischen Zugriff der Steuergeräte auf die I/O-Einheiten 15 dar, die Kommunikation erfolgt über den Feldbus 11.

Im Feldbus 11 werden nun sichere Steuergeräte 12 betrieben, die mit sicheren I/O-Einheiten 15₁, oder anderen sicheren Busteilnehmern, kommunizieren. Dazu ist im Steuergerät 12 und in den sicheren I/O-Einheiten 15₁ bzw. im Buscontroller 14 ein Sicherheitsprotokoll, z.B. OpenSAFETY implementiert. Die sicheren Daten werden im Feldbus 11 in einem vom verwendeten Industrial Ethernet Protokoll, wie z.B. PROFINET, unabhängigen Protokoll, wie z.B. OpenSAFETY über TCP/IP oder UDP/IP (wie in Fig.2 dargestellt), übertragen, wobei unter "Übertragen" sowohl das Senden, als auch das Empfangen von Daten verstanden wird. Im Feldbus 11 können noch weiters nicht sichere Busteilnehmer, wie ein nicht sicheres Steuergerät 13 und nicht sichere I/O-Einheiten 15₂, betrieben werden. Dazu ist auf diesen nicht sicheren Geräten das Industrial Ethernet Protokoll, z.B. PROFINET, implementiert.

Im Falle eines Buscontrollers 14, muss auf diesem sowohl das Sicherheitsprotokoll, als auch das Industrial Ethernet Protokoll implementiert sein, um mit beiden kommunizieren zu können.

Im sicheren Steuergerät 12 und/oder im Buscontroller 14 und/oder den sicheren I/O-Einheiten 15₁, oder anderen sicheren Busgeräten, ist anstelle der Sitzungsschicht und/oder Darstellungsschicht (Schichten 5 und 6 im OSI-Modell) des Industrial Ethernet Protokolls, die vom Industrial Ethernet Protokoll unabhängige Sitzungsschicht und/oder Darstellungsschicht des Sicherheitsprotokolls implementiert. Damit wird das sichere Busgerät unabhängig vom Industrial Ethernet und kann in jeden Industrial Ethernet verwendet werden, ohne dass wesentliche Anpassungen vorgenommen werden müssen. D.h., dass z.B. ein Gerät auf dem als Sicherheitsprotokoll OpenSAFETY implementiert ist und das auch die Schichten 5 und 6 des Sicherheitsprotokolls verwendet mit jedem anderen derart ausgestalteten Busgerät über den Feldbus 11 kommunizieren kann und zwar unabhängig von der tatsächlichen Ausprägung des Industrial Ethernet Protokolls - das Gerät wird somit unabhängig vom Industrial Ethernet Protokoll.

Selbstverständlich könnte im Busgerät neben den Schichten 5 und 6 des Sicherheitsprotokolls auch noch die Schichten 5 und 6 eines Industrial Ethernet Protokolls implementiert haben, also z.B. CIP des Ethernet/IP-Protokolls, wie in Fig.2 angedeutet. Damit könnte ein solches Busgerät auch mit herkömmlichen sicheren oder nicht sicheren Busgeräten kommunizieren, die als Sitzungsschicht und/oder Darstellungsschichten die des Industrial Ethernet Protokolls nutzen. Damit wird ein solches Busgerät noch flexibler in der Anwendbarkeit.

## Patentansprüche

1. Verfahren zum Übertragen von sicherheitsgerichteten Daten eines Sicherheitsprotokolls in einem ethernetbasierten Feldbus (11), **dadurch gekennzeichnet, dass** ein Industrial Ethernet Protokoll zum Übertragen der sicherheitsgerichteten Daten verwendet wird, das auf einem standardisierten Industrial Ethernet Protokoll basiert, wobei das Industrial Ethernet Protokoll anstelle der im standardisierten Industrial Ethernet Protokoll implementierten Sitzungsschicht (5) und/oder Darstellungsschicht (6), die vom standardisierten Industrial Ethernet Protokoll unabhängige Sitzungsschicht (5) und/oder die Darstellungsschicht (6) des Sicherheitsprotokolls verwendet.

2. Busgerät zum Übertragen von sicherheitsgerichteten Daten eines Sicherheitsprotokolls über einen ethernetbasierten Feldbus (11) **dadurch gekennzeichnet, dass** im Busgerät (12, 14, 15₁) das Sicherheitsprotokoll implementiert ist und im Busgerät (12, 14, 15₁) anstelle der Sitzungsschicht (5) und/oder Darstellungsschicht (6) eines standardisierten Industrial Ethernet Protokolls, die vom standardisierten Industrial Ethernet Protokoll unabhängige Sitzungsschicht (5) und/oder die Darstellungsschicht (6) des Sicherheitsprotokolls implementiert ist.

## Claims

1. Method for transferring safety-related data of a safety protocol in an Ethernet based field bus (11), **characterized in that** an industrial Ethernet protocol is used for transferring the safety-related data, which protocol is based on a standardized industrial Ethernet protocol, whereby the industrial Ethernet protocol uses the session layer (5), which is independent of the standardized industrial Ethernet protocol, and/or the presentation layer (6) of the safety protocol, instead of the session layer (5) and/or presentation layer (6), which is implemented in the standardized industrial Ethernet protocol.

2. Bus device for transferring safety-related data of a safety protocol via an Ethernet based field bus (11), **characterized in that** the safety protocol is implemented in the bus device (14, 15₁) and **in that** the session layer (5), which is independent of the standardized industrial Ethernet protocol, and/or the presentation layer (6) of the safety protocol is implemented in the bus device (12, 14, 15₁), instead of the session layer (5) and/or the presentation layer (6) of a standardized industrial Ethernet protocol.

## Revendications

1. Procédé de transfert de données relatives à la sécurité d'un protocole de sécurité dans un bus de terrain basé sur Ethernet (11), **caractérisé en ce qu'**un protocole Ethernet industriel pour le transfert de données relatives à la sécurité est utilisé, lequel se base sur un protocole Ethernet industriel normalisé, le protocole Ethernet industriel utilisant, à la place de la couche session (5) et/ou de la couche présentation (6) implémentées dans le protocole Ethernet industriel normalisé, la couche session (5) indépendante du protocole Ethernet industriel normalisé et/ou la couche présentation (6) du protocole de sécurité.

2. Dispositif de bus de transfert de données relatives à la sécurité d'un protocole de sécurité au moyen d'un bus de terrain basé sur Ethernet (11), **caractérisé en ce que** le protocole de sécurité est implémenté dans le dispositif de bus (12, 14, 15₁) et, dans le dispositif de bus (12, 14, 15₁), à la place de la couche session (5) et/ou de la couche présentation (6) d'un protocole Ethernet industriel normalisé, est implémentée la couche session (5) indépendante du protocole Ethernet industriel normalisé et/ou la couche présentation (6) du protocole de sécurité.
